# EUROPÄISCHE PATENTSCHRIFT

(11) **EP 1 524 002 B1**
(45) Veröffentlichungstag und Bekanntmachung des Hinweises auf die Patenterteilung: **23.04.2008**
(21) Anmeldenummer: 04014087.3
(22) Anmeldetag: 16.06.2004
(51) Int. Cl.: A61M 5/315

(54) **Halteeinrichtung mit Momentbegrenzung für in Teile einzuschraubende Gegenstände**
Torque limiting holding device for pieces to be screwed in objects
Dispositif de préhension avec limitation du couple pour visser une pièce dans un objet

(30) Priorität: 16.10.2003 DE 10348054
(43) Veröffentlichungstag der Anmeldung: 20.04.2005
(73) Patentinhaber: GRONINGER & CO. GMBH, D-74564 Crailsheim (DE)
(72) Erfinder: Neber, Fritz, Dipl.-Ing. FH, 74523 Schwäbisch Hall (DE)
(74) Vertreter: Kratzsch, Volkhard

(56) Entgegenhaltungen:
- EP-A1- 0 639 529
- DE-U1- 9 108 831
- DE-U1- 20 104 435

## Beschreibung

Die Erfindung bezieht sich auf eine Halteeinrichtung mit Momentbegrenzung für in Teile einzuschraubende Gegenstände der im Oberbegriff des Anspruchs 1 genannten Art.

Derartige Einschraubaufgaben kommen auf vielfältigen Gebieten vor, auf denen derartige Halteeinreichtungen mit Momentbegrenzung einsetzbar sind. Ein Beispiel dafür ist das Füllen und Zusammensetzen von medizinischen Spritzen. Hierzu dienen Anlagen, in denen die einzelnen Arbeitsgänge im automatischen Prozess abgewickelt werden, z. B. das Füllen des Spritzenzylinders, anschließend das Einsetzen des Kolbens in den gefüllten Spritzenzylinder und hiernach das Einschrauben der Kolbenstange in den Kolben. Der Kolben besteht meist aus Kunststoff, Gummi od. dgl. leicht verformbarem Material.

Es ist eine Halteeinrichtung der eingangs genannten Art mit den Merkmalen des Oberbegriffs des Anspruchs 1 bekannt (DE 91 08 831 U1), die eine Bremseinrichtung mit einem an einer Halterung befindlichen Bremsglied aufweist, das mit dem nicht drehenden Gegenstand beim Eindrehen dieses in Berührung bringbar ist und den Gegenstand mit vorgegebenem Bremsmoment undrehbar festhält. Diese Bremseinrichtung drückt von oben her auf den einzuschraubenden Gegenstand, insbesondere die Kolbenstange, auf die eine mittels Druckfeder einstellbare Kraft ausgeübt wird, die nötig ist, um das entsprechende Bremsmoment zu erzeugen. Aufgrund dieser auf die Kolbenstange in Richtung des Kolbens wirkenden Axialkraft ergeben sich beim Ansetzen der Kolbenstange an das Gewinde des Kolbens und beim Einschrauben Nachteile. Es besteht die Gefahr, dass dabei das Gewinde des relativ weichen Kolbens überspringt oder der Kolben gedreht oder gar im Spritzenzylinder etwas verschoben wird. Dadurch kann sich innerhalb des Spritzenzylinders ein gewisser Überdruck aufbauen mit der Folge, dass dann, wenn der Anwender später die den Spritzenzylinder abschließende Verschlusskappe am unteren Ende des Spritzenzylinders entfernt, das eingefüllte Produkt austritt.

Der Erfindung liegt die Aufgabe zugrunde, eine Halteeinrichtung der eingangs genannten Art zu schaffen, bei der verhindert ist, dass beim Einschrauben des Gegenstandes, insbesondere der Kolbenstange, in den Teil, insbesondere Kolben, ein Überspringen des Gewindes erfolgt und dass im übrigen auf den einzuschraubenden Gegenstand eine in Richtung zum Teil, insbesondere zum Kolben, wirkende Axialkraft einwirkt.

Die Aufgabe ist bei einer Halteeinrichtung der eingangs genannten Art gemäß der Erfindung durch die Merkmale im Anspruch 1 gelöst. Durch die elektrische Bremse wird in einfacher Weise sichergestellt, dass beim Einschrauben kein Überspringen des Gewindes geschieht. Eine derartige Bremseinrichtung in Form einer elektrischen Bremse kann vielfältig gestaltet sein und hat vielfältige Vorteile. Im Vergleich zu einer Bremseinrichtung mit Rutschkupplung, bei der aufgrund des Abriebs das Bremsmoment sich im Dauerbetrieb über längere Zeit verändert, ist bei einer elektrischen Bremse gewährleistet, dass das Bremsmoment im Dauerbetrieb über lange Zeit konstant bleibt. Da eine elektrische Bremse sehr einfach einer Steuerung und damit einer Veränderung des Bremsmoments auf Wege zugänglich ist, kann das Bremsmoment schnell und einfach verstellt und an unterschiedliche Gegebenheiten angepasst werden. Bei Kolbenstangeneinsetzanlagen, die eine Vielzahl einzelner Stationen aufweisen, kann für alle Stationen das Bremsmoment zentral eingestellt und bei veränderten Bedingungen verstellt werden. Dies ist außerordentlich einfach und gewährleistet für alle Stationen gleiche Bedingungen. Von Vorteil ist ferner, dass praktisch keine Axialkraft auf den einzuschraubenden Teil, insbesondere die Kolbenstange, wirkt und somit alle damit sonst verbundenen Nachteile beseitigt sind. Es wirkt beim Einschrauben des Gegenstandes in das Teil, insbesondere beim Einschrauben der Kolbenstange in den Kolben, praktisch keine Axialkraft und kein Druck auf den Kolben, so dass keine Gefahr einer etwaigen Drehung oder Verschiebung des Kolbens besteht. Bei allem ist die Halteeinrichtung einfach, kompakt, platzsparend und kostengünstig. Sie besteht aus nur wenigen Teilen.

Weitere vorteilhafte Erfindungsmerkmale sowie Ausgestaltungen ergeben sich aus den übrigen Ansprüchen 2 bis 9. Von besonderem Vorteil ist es, wenn die Bremseinrichtung einen elektrischen Schrittmotor aufweist. Dieser wird nicht mit der Funktion als motorischer Antrieb eingesetzt, sondern er wird im Stillstand und als Bremse betrieben. Hierzu wird der Schrittmotor mit einem Ruhestrom entsprechender Größe gespeist, wodurch ein entsprechendes Bremsmoment eingestellt wird. Derartige Schrittmotoren stellen handelsübliche Bauteile dar. Sie sind daher kostengünstig und außerdem klein, leicht und kompakt, weswegen sie für den genannten Einsatzzweck mit besonderem Vorteil geeignet sind.

Weitere Einzelheiten und Vorteile der Erfindung ergeben sich aus der nachfolgenden Beschreibung.

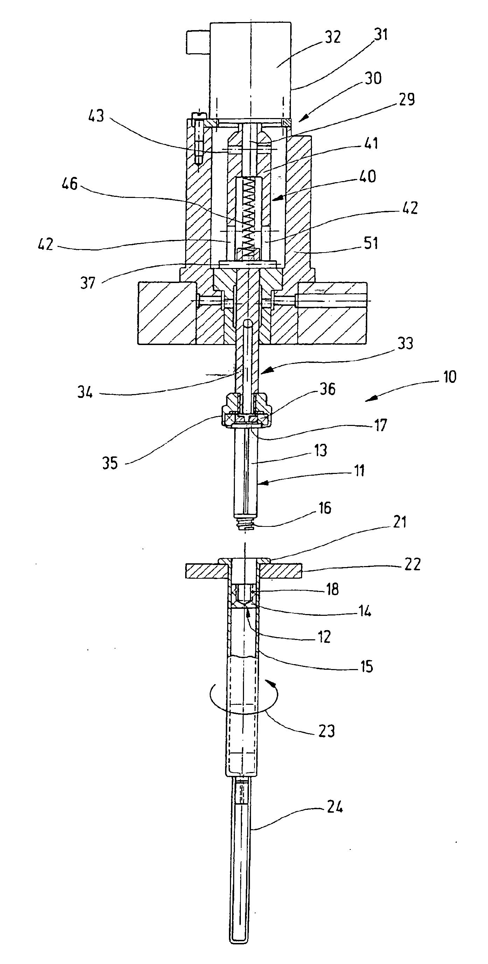

Die Erfindung ist nachfolgend anhand eines in der Zeichnung gezeigten Ausführungsbeispiels näher erläutert. Die Zeichnung zeigt einen schematischen axialen Längsschnitt mit teilweiser Seitenansicht einer Halteeinrichtung mit Momentbegrenzung für in Teile einzuschraubende Gegenstände.

In der Zeichnung sind von einer Halteeinrichtung 10 lediglich die für den vorliegenden Fall wesentlichen Elemente gezeigt. Die Halteeinrichtung 10 ermöglicht eine Momentbegrenzung für Gegenstände 11, die in Teile 12 eingeschraubt werden. Beim gezeigten Ausführungsbeispiel ist die Halteeinrichtung 10 Teil einer nicht weiter dargestellten Anlage, mittels der Spritzen gefüllt und zusammengebaut werden. Die Halteeinrichtung 10 ist dabei eine von z.B. zwölf gleichartigen Einrichtungen, die an einer kontinuierlich arbeitenden Kolbenstangeneinsetzanlage angebracht sind. Bei dieser Anlage sind als Gegenstände 11 Kolbenstangen 13 der Spritzen vorgesehen, die in Kolben 14 als Teile eingeschraubt werden sollen, die innerhalb des Spritzenzylinders 15 enthalten sind und an der Innenwand des Spritzenzylinders 15 durch Haftreibung gehalten sind. Die Kolbenstange 13 weist einen unteren Gewindeabsatz 16 und am gegenüberliegenden Ende eine hier z.B. kreisförmige Fingerauflage 17 auf, die fester Bestandteil der Kolbenstange 13 sind. Der Kolben 14, der aus Kunststoff, Gummi od.dgl. besteht, enthält eine innere Gewindebohrung 18, in die die Kolbenstange 13 mit ihrem Gewindeabsatz 16 eingeschraubt werden soll.

Beim gezeigten Ausführungsbeispiel ist für diesen Einschraubvorgang der Teil 12 in Form des Kolbens 14 in der Richtung, die dem Gewindeverlauf der Gewindebohrung 18 entspricht, umlaufend angetrieben, wie dies durch den Pfeil 23 angedeutet ist, während der Gegenstand 11 in Form der Kolbenstange 13 relativ dazu undrehbar gehalten ist. Der Spritzenzylinder 15 ist in dem in der Zeichnung gezeigten Stadium z.B. in einem Transportstern od.dgl. gehalten, wobei der Spritzenzylinder 15 mit seiner Außenfläche z.B. an zwei nicht weiter gezeigten, drehbar gelagerten Rollen anliegt, während auf der anderen Seite des Spritzenzylinders 15 ein nicht gezeigtes Band verläuft, das mit der Außenfläche des Spritzenzylinders 15 in reibschlüssiger Berührung steht und in einer Richtung für den Drehantrieb des Spritzenzylinders 15 in Pfeilrichtung 23 angetrieben ist. Über den in Umlaufrichtung angetriebenen Spritzenzylinder 15 wird der darin befindliche, reibschlüssig an der Innenfläche des Spritzenzylinders 15 anliegende Kolben 14 in gleicher Richtung mitgenommen, so dass bei festgehaltener Kolbenstange 13 diese sich mit ihrem unteren Gewindeabsatz 16 in die Gewindebohrung 18 des Kolbens 14 einschrauben kann.

Der Spritzenzylinder 15 weist in üblicher Weise am oberen Ende einen Steg 21 auf, der bei der Handhabung als Fingerauflage dient und mit dem der Spritzenzylinder 15 in vertikaler Richtung auf einem hier nur schematisch angedeuteten Halteteil 22 ruht und abgestützt ist.

Der Spritzenzylinder 15 ist im Inneren mit einem z.B. flüssigen Produkt vorgegebener Menge gefüllt und am unteren Ende mit einer abnehmbaren Verschlusskappe 24 z.B. aus Gummi verschlossen.

Beim Einschrauben der Kolbenstange 13 mit ihrem Gewindeabsatz 16 in den Kolben 14 nach bekannter Methode und z.B. mittels einer aus DE 91 08 831 U1 bekannten Halteeinrichtung ist es unvermeidbar, dass beim Abbremsen der Kolbenstange 13 auf letztere eine in Richtung zum Kolben 14 weisende Axialkraft einwirkt. Diese wirkt sich nachteilig beim Ansetzen der Kolbenstange 13 mit dem Gewindeabsatz 16 an die Gewindebohrung 18 des Kolbens 14 aus. Es besteht insbesondere die Gefahr, dass dabei der Kolben 14 tiefer in den Spritzenzylinder 15 hineingedrückt und auch nur geringfügig verschoben wird, wodurch sich im Inneren des Spritzenzylinders 15 ein gewisser Überdruck aufbaut. Ein solcher Überdruck hat zur Folge, dass das im Spritzenzylinder 15 enthaltene Produkt dann austritt, wenn der Benutzer die Verschlusskappe 24 am unteren Ende des Spritzenzylinders 15 entfernt. Bereits ein Verdrehen des Kolbens 14 im Spritzenzylinder 15 beim Einschrauben der Kolbenstange 13 ist von Nachteil. Bei einer anderen bekannten Halteeinrichtung mit einer Bremseinrichtung in Form einer Rutschkupplung unterliegen die Elemente der Rutschkupplung einem Verschleiß in Form von Abrieb od.dgl., mit der Folge, dass sich die Größe des vorgegebenen Bremsmoments dadurch im Dauerbetrieb über längere Zeit verändert. Das Bremsmoment muss einzeln für die einzelnen Stationen eingestellt werden, besonders z.B. dann, wenn verschieden große Gegenstände 11, insbesondere Kolbenstangen 13, in entsprechende Kolben 14 von Spritzenzylindern 15 eingeschraubt werden sollen. Beim Einschrauben der Kolbenstange 13 mit dem Gewindeabsatz 16 in die Gewindebohrung 18 des Kolbens 14 besteht außerdem die Gefahr, dass bei dem weichen Material des Kolbens 14 dessen Gewinde überspringt.

Die genannten Nachteile werden durch die Halteeinrichtung 10 gezeigter Art gemäß der Erfindung beseitigt. Die Halteeinrichtung 10 weist eine Halterung 33 für den nicht drehenden Gegenstand 11, beim gezeigten Ausführungsbeispiel für die nicht drehende Kolbenstange 13, auf und ist ferner mit einer Bremseinrichtung 30 versehen, die diese Halterung 33 und über letztere den Gegenstand 11, das heißt beim gezeigten Ausführungsbeispiel die Kolbenstange 13, mit vorgegebenem Bremsmoment Mt1 undrehbar festhält. Diese Bremseinrichtung 30 weist in besonderer Gestaltung eine auf die Halterung 33 wirkende elektrische Bremse 31 auf. Diese elektrische Bremse 31 kann vielfältig gestaltet sein, z.B. als in einem Magnetfeld vorgegebener Größe gehaltener Rotor, als Hysteresekupplung, als Wirbelstrombremse od.dgl. Als besonders vorteilhaft hat sich eine elektrische Bremse 31 in Form eines elektrischen Schrittmotors 32 erwiesen. Derartige Schrittmotoren sind handelsüblich und als derartige Bauteile fertig käuflich erwerbbar. Sie sind kostengünstig, klein und leicht und können als elektrische Bremse 31 hochwirksam sein. Bei der Halteeinrichtung 10 beschriebener Art werden diese elektrischen Schrittmotoren 32 nicht für den Drehantrieb, für den diese eigentlich bestimmt sind, verwendet, sondern als elektrische Bremse 31. Der jeweilige Schrittmotor 32 wird mit einem Ruhestrom jeweils vorgegebener Größe gespeist und befindet sich im Stillstand. Er begrenzt lediglich das Drehmoment beim Einschrauben der jeweiligen Kolbenstange 13 in den Kolben 14. Bei Überschreiten des durch die Größe des Ruhestroms vorgegebenen Bremsmoments Mt1 wird der Schrittmotor 32 mittels der Halterung 33 gegensinnig zur eigentlichen Antriebsrichtung gedreht.

Das erzeugte Bremsmoment Mt1 hat praktisch keine in Richtung zum Kolben 14 weisende Axialkraft, die auf die Kolbenstange 13 ausgeübt wird, zur Folge. Es wird beim Ansetzen des Gewindeabsatzes 16 an die Gewindebohrung 18 des Kolbens 14 und beim Einschrauben in diesen kein Druck auf den Kolben 14 ausgeübt und dabei verhindert, dass beim Eindrehen der Kolben 14 im Spritzenzylinder 15 gedreht oder gar verschoben wird. Ferner wird beim Einschrauben ein Überspringen des Gewindes des Kolbens 14 verhindert.

Die Halterung 33 weist einen Stößel 34 mit einem Aufnahmekopf 35 für die festzuhaltenden Gegenstände 11, insbesondere für die Kolbenstangen 13, auf. Der Stößel 34 ist im wesentlichen koaxial zur Kolbenstange 13 angeordnet und in üblicher Weise verschiebbar, jedoch undrehbar, gehalten. Der Aufnahmekopf 35 ist mit einer Vakuumhalterung 36 üblicher Art für einen Endteil, insbesondere die Fingerauflage 17, des festzuhaltenden Gegenstandes 11 versehen. Details des Aufnahmekopfes 35 und der Vakuumhalterung 36 bedürfen keiner besonderen Beschreibung. Diesbezüglich ist z.B. zu verweisen auf DE 201 04 435 U1.

Die Halterung 33 weist ferner ein mit der Bremseinrichtung 30 drehfest und axial unverschiebbar verbundenes Übertragungsglied 40 z.B. in Form einer Hülse 41 auf. Das Übertragungsglied 40 ist undrehbar jedoch axial relativ verschieblich mit dem Stößel 34 verbunden. Es verläuft im wesentlichen koaxial zum Stößel 34. Zu dieser Verbindung weist der Stößel 34 einen Querstift 37 auf, der mit den Stiftenden in zugeordnete vertikale Schlitze 42 der Hülse 41 formschlüssig jedoch mit axialer Relativverschiebbarkeit eingreift. Im Bereich des anderen Endes ist die Hülse 41 auf einem Antriebszapfen 29 der elektrischen Bremse 31 zentriert gehalten und mittels eines Querstiftes mit dem Antriebszapfen 29 in Umfangsrichtung formschlüssig verbunden. Im Axialbereich zwischen der Hülse 41 und dem Stößel 34 ist eine Druckfeder 46 angeordnet, die mit ihren Enden einerseits an der Hülse 41 und andererseits am Stößel 34 abgestützt ist und die bei der Relativverschiebbarkeit beider Teile der Halterung 33 ausgleichend wirkt.

Die Halterung 33, insbesondere deren Stößel 34 und Übertragungsglied 40, sind innerhalb eines Gehäuses 51 angeordnet. Am in der Zeichnung oberen Ende des Gehäuses 51 ist die elektrische Bremse 31 lösbar und derart befestigt, dass deren Antriebszapfen 29 in das Gehäuse 51 hineinragt. Das Gehäuse 51 mit allen daran bzw. darin gehaltenen Teilen ist in Richtung zum Spritzenzylinder 15 und gegensinnig dazu bewegbar.

Das im Bereich des Aufnahmekopfes 35 zwischen diesem und der Fingerauflage 17 herrschende Haltemoment Mt2 ist größer als das Bremsmoment Mt1 der Bremseinrichtung 30, dessen Größe durch den Ruhestrom, mit dem der Schrittmotor 32 gespeist wird, vorgegeben ist. Die Drehmomentbegrenzung erfolgt beim elektrischen Schrittmotor 32 somit über dessen Strombegrenzung. Diese Gestaltung hat vielfältige Vorteile. Ein elektrischer Schrittmotor 32 ist als derartiges Bauteil fertig verfügbar und käuflich und dabei kostengünstig, klein und leicht. Sein Bremsmoment Mt1 bleibt auch im Dauerbetrieb über längere Zeit konstant. Von besonderem Vorteil ist ferner, dass für alle Stationen einer kontinuierlich arbeitenden Kolbenstangeneinsetzanlage das jeweilige Bremsmoment zentral durch zentrale Vorgabe des Ruhestroms eingestellt werden kann. Die einmalige Einstellung des Bremsmoments für alle Stationen lässt sich schnell und einfach bewerkstelligen. Werden in der beschriebenen Anlage Kolbenstangen 13 anderer Größe verarbeitet, so kann auch dann für alle Stationen das entsprechende Bremsmoment zentral eingestellt werden. Bei allem ist sichergestellt, dass beim Einschrauben der Kolbenstange 13 in den Kolben 14 praktisch keine Axialkraft auf die Kolbenstange 13 in Richtung zum Kolben 14 wirkt und somit auf den Kolben 14 kein Druck ausgeübt wird, wodurch verhindert wird, dass der Kolben 14 beim Einschrauben evtl. gedreht oder gar axial verschoben wird. Dem wird im Gegenteil eher gegensinnig in der Weise entgegengewirkt, dass aufgrund der Vakuumhalterung 36 im Aufnahmekopf 35 die Kolbenstange 13 in dem Kolben 14 abgewandter Axialrichtung nach oben gezogen wird.

## Patentansprüche

1. Halteeinrichtung mit Momentbegrenzung für in umlaufend angetriebene Teile (12) einzuschraubende Gegenstände (11), insbesondere für Kolbenstangen (13), die in innerhalb von Spritzenzylindern (15) enthaltene Kolben (14) einschraubbar sind, mit einer Halterung (33) für den Gegenstand (11,13) und einer Bremseinrichtung (30), die die Halterung (33) und über diese den Gegenstand (11,13) in Bezug auf die Bremseinrichtung (30) mit vorgegebenem Bremsmoment (Mt1) bis zum Überschreiten dieses undrehbar festhält,
**dadurch gekennzeichnet,**
**dass** die Bremseinrichtung (30) eine auf die Halterung (33) wirkende elektrische Bremse (31) aufweist.

2. Halteeinrichtung nach Anspruch 1,
**dadurch gekennzeichnet,**
**dass** die Bremseinrichtung (30) einen elektrischen Schrittmotor (32) aufweist.

3. Halteeinrichtung nach Anspruch 1 oder 2,
**dadurch gekennzeichnet,**
**dass** die Halterung (33) einen Stößel (34) mit einem Aufnahmekopf (35) für die festzuhaltenden Gegenstände (11), insbesondere für die Kolbenstangen (13), aufweist.

4. Halteeinrichtung nach Anspruch 3,
**dadurch gekennzeichnet,**
**dass** der Aufnahmekopf (35) mit einer Vakuumhalterung (36) für einen Endteil, insbesondere eine Fingerauflage (17), des festzuhaltenden Gegenstandes (11), insbesondere der Kolbenstange (13), versehen ist.

5. Halteeinrichtung nach einem der Ansprüche 1 bis 4,
**dadurch gekennzeichnet,**
**dass** die Halterung (33) ein mit der Bremseinrichtung (30) drehfest und axial unverschiebbar verbundenes Übertragungsglied (40), z.B. eine Hülse (41), aufweist, das undrehbar jedoch axial relativ verschieblich mit dem Stößel (34) verbunden ist.

6. Halteeinrichtung nach einem der Ansprüche 1 bis 5,
**dadurch gekennzeichnet,**
**dass** axial zwischen dem Übertragungsglied (40) und dem Stößel (34) eine Druckfeder (46) angeordnet ist.

7. Halteeinrichtung nach einem der Ansprüche 1 bis 6,
**dadurch gekennzeichnet,**
**dass** die Halterung (33), insbesondere deren Stößel (34) und Übertragungsglied (40), innerhalb eines Gehäuses (51) angeordnet ist.

8. Halteeinrichtung nach einem der Ansprüche 1 bis 7,
**dadurch gekennzeichnet,**
**dass** die Bremseinrichtung (30) an dem Gehäuse (51), insbesondere an dessen dem Aufnahmekopf (35) der Halterung (33) abgewandten Ende, befestigt ist.

9. Halteeinrichtung nach einem der Ansprüche 1 bis 8,
**dadurch gekennzeichnet,**
**dass** die Bremseinrichtung (30) mit einem Antriebszapfen (29) in das Gehäuse (51) hineinragt.

## Claims

1. Torque limiting holding device for objects (11) which have to be screwed into parts (12) driven in a revolving manner, in particular for plunger rods, (13) which can be screwed into plungers (14) contained within syringe cylinders (15), with a holder (33) for the object (11, 13) and with a braking device (30) which secures the holder (33) and, via the latter, the object (11, 13) in a non-rotatable manner with respect to the braking device (30) at a predetermined braking torque (Mt1) until said braking torque is exceeded, **characterized in that** the braking device (30) has an electric brake (31) acting on the holder (33).

2. Holding device according to Claim 1, **characterized in that** the braking device (30) has an electric stepping motor (32).

3. Holding device according to Claim 1 or 2, **characterized in that** the holder (33) has a ram (34) with a receiving head (35) for the objects (11) to be secured, in particular for the plunger rods (13).

4. Holding device according to Claim 3, **characterized in that** the receiving head (35) is provided with a vacuum holder (36) for an end part, in particular a finger rest (17), of the object (11) to be secured, in particular the plunger rod (13).

5. Holding device according to one of Claims 1 to 4, **characterized in that** the holder (33) has a transmission element (40), for example a sleeve (41), which is connected to the braking device (30) in a rotationally fixed and axially non-displaceable manner and is connected to the ram (34) in a non-rotatable but axially displaceable manner relative thereto.

6. Holding device according to one of Claims 1 to 5, **characterized in that** a compression spring (46) is arranged axially between the transmission element (40) and the ram (34).

7. Holding device according to one of Claims 1 to 6, **characterized in that** the holder (33), in particular the ram (34) and transmission element (40) thereof, is arranged within a housing (51).

8. Holding device according to one of Claims 1 to 7, **characterized in that** the braking device (30) is fastened to the housing (51), in particular to its end which faces away from the receiving head (35) of the holder (33).

9. Holding device according to one of Claims 1 to 8, **characterized in that** the braking device (30) projects with a driving pin (29) into the housing (51).

## Revendications

1. Dispositif de fixation avec limitation du couple pour des objets (11) à visser dans des pièces entraînées en rotation (12), notamment pour des tiges de piston (13) qui peuvent être vissées dans des pistons (14) reçus à l'intérieur de cylindres de seringues, avec une fixation (33) pour l'objet (11, 13) et un système de frein (30) qui fixe en rotation la fixation (33), et par le biais de cette dernière, l'objet (11, 13), par rapport au système de frein (30) avec un couple de freinage prédéfini (Mt1) jusqu'au dépassement de ce couple,
**caractérisé en ce que**
le système de frein (30) présente un frein électrique (31) agissant sur la fixation (33).

2. Dispositif de fixation selon la revendication 1,
**caractérisé en ce que**
le système de frein (30) présente un moteur pas à pas électrique (32) .

3. Dispositif de fixation selon la revendication 1 ou 2,
**caractérisé en ce que**
la fixation (33) présente un poussoir (34) avec une tête de réception (35) pour les objets à fixer (11), notamment pour les tiges de piston (13).

4. Dispositif de fixation selon la revendication 3,
**caractérisé en ce que**
la tête de réception (35) est pourvue d'une fixation à vide (36) pour une pièce de bout, notamment un appui pour les doigts (17), de l'objet à fixer (11), notamment de la tige de piston (13).

5. Dispositif de fixation selon l'une quelconque des revendications 1 à 4,
**caractérisé en ce que**
la fixation (33) présente un organe de transfert (40) connecté de manière solidaire en rotation et immobile axialement au système de frein (30), par exemple une douille (41), qui est connectée au poussoir (34) de manière fixe en rotation mais toutefois relativement mobile axialement.

6. Dispositif de fixation selon l'une quelconque des revendications 1 à 5,
**caractérisé en ce**
**qu'**un ressort de pression (46) est disposé axialement entre l'organe de transfert (40) et le poussoir (34).

7. Dispositif de fixation selon l'une quelconque des revendications 1 à 6,
**caractérisé en ce que**
la fixation (33), notamment son poussoir (34) et l'organe de transfert (40), sont disposés à l'intérieur d'un corps (51).

8. Dispositif de fixation selon l'une quelconque des revendications 1 à 7,
**caractérisé en ce que**
le système de frein (30) est fixé sur le corps (51), notamment sur son extrémité opposée à la tête de réception (35) de la fixation (33).

9. Dispositif de fixation selon l'une quelconque des revendications 1 à 8,
**caractérisé en ce que**
le système de frein (30) pénètre avec un tourillon d'entraînement (29) dans le corps (51).
